(19) Europäisches Patentamt
European Patent Office
Office européen des brevets

(11) **EP 1 983 201 A1**

(12) **EUROPEAN PATENT APPLICATION**
published in accordance with Art. 158(3) EPC

(43) Date of publication:
**22.10.2008 Bulletin 2008/43**

(51) Int Cl.:
*F16C 11/04* (2006.01)    *G06F 1/16* (2006.01)
*H04M 1/02* (2006.01)

(21) Application number: **07706831.0**

(22) Date of filing: **16.01.2007**

(86) International application number:
**PCT/JP2007/050504**

(87) International publication number:
**WO 2007/086281 (02.08.2007 Gazette 2007/31)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.01.2006 JP 2006014634**

(71) Applicant: **Kabushiki Kaisha Strawberry Corporation Tokyo 171-0021 (JP)**

(72) Inventor: **YAMANAMI, Masahiko Tokyo 171-0021 (JP)**

(74) Representative: **Kitzhofer, Thomas Prinz & Partner GbR Rundfunkplatz 2 80335 München (DE)**

(54) **HINGE AND ELECTRONIC APPARATUS EMPLOYING HINGE**

(57)    It is an object of the present invention to provide an innovative hinge device of a dual-shaft construction that performs a synchronized pivoting motion, and that can smoothly perform an undulating pivoting motion without any unsteadiness; and an electronic device using the hinge device. The present invention is a hinge device in which a second member 2 is connected to a first member 1 so that the second member 2 can perform an undulating pivoting motion from a state in which the first member 1 and second member 2 are overlapped, wherein the hinge device is constructed so that pivot shaft parts 4 and 5 are disposed in parallel on a hinge base 3 disposed between the end part of the first member 1 and the end part of the second member 2; the hinge base 3 is provided so as to be free to perform an undulating pivoting motion with respect to the first member 1 via the first pivot shaft part 4; the second member 2 is disposed so as to be free to perform an undulating pivoting motion with respect to the hinge base 3 via the second pivot shaft part 5; a first pivoting part 6 and second pivoting part 7 that pivot in a relative manner when performing an undulating pivoting motion are respectively disposed on the first pivot shaft part 4 and second pivot shaft part 5; and the first pivoting part 6 and second pivoting part 7 are connected by a connecting link part 17, so that the second pivoting part 7 is caused to perform a transmitted co-pivoting motion by this first pivoting part 6.

FIG. 8

**Description**

TECHNICAL FIELD

The present invention relates to a hinge device provided to the pivot mounting part of a mobile telephone, a mobile device, a notebook personal computer, a digital camera, or other electronic device, for example, and to an electronic device that uses the hinge device.

BACKGROUND ART

When a configuration is adopted in which the end parts of two members are connected to each other by a hinge device so that one member is able to pivot with respect to the other member, merely providing the hinge device flush with one member and connecting the other member via the hinge device does not enable both members to be overlapped on each other even by pivoting one member with respect to the other member.

Specifically, when a configuration is adopted in which one member is pivoted open in undulating fashion 180° or near 180° with respect to the other member from a state in which plate-shaped members having a prescribed thickness are overlapped on each other, for example, the hinge device is installed between the end parts of both members, but the hinge device is configured so that a bearing part or axle part, or an attachment part for attaching the bearing part and axle part is provided to the end part of one member so as to protrude upward; an axle part or bearing part provided to the other member, or a hinge device in which the axle part and bearing part are assembled is attached to the attachment part; and the members can pivot to a mutually overlapped state. In any of these configurations, the members cannot be closed to an overlapped state unless the axle part of the hinge device is installed in one of the members in a position so as to protrude to the opposing side.

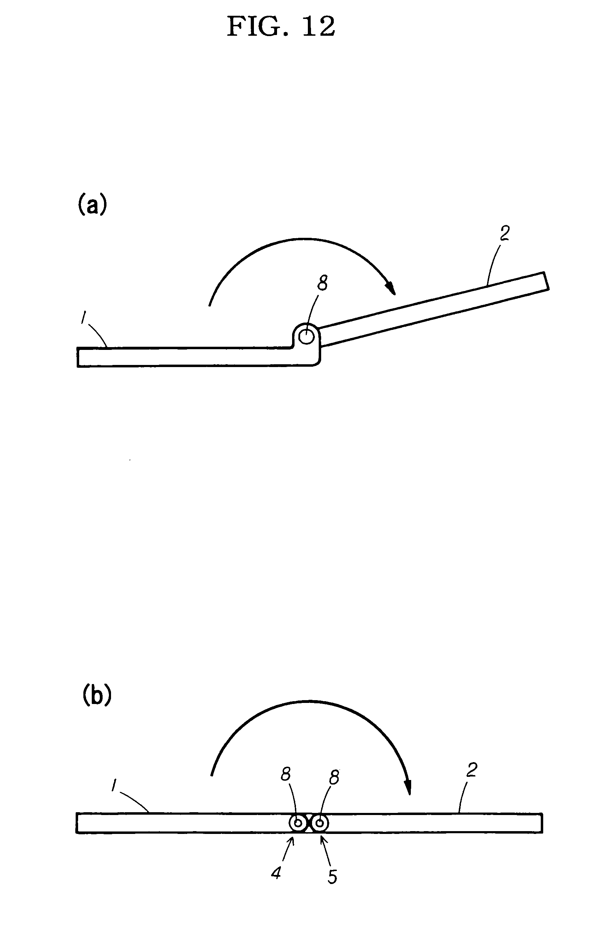

Consequently, since the hinge device must be provided so as to protrude upward with respect to one member in this manner in order to achieve the overlapped state as shown in FIG. 12A, in an opened state in which one member is pivoted open 150 to 180°, for example, with respect to the other member, and both members are connected in linear fashion, for example, a protruding portion is always formed by the hinge in the middle part, both open surfaces are not in the same plane, a difference in level occurs, and a flat open-linked surface is not formed when the members are open.

In a slightly more specific example, the end parts of a main body and an opening and closing part such as in a mobile telephone or a personal computer, for example, are connected via a hinge device so as to be able to pivot in undulating fashion from a state in which the opening and closing part provided with a display part is overlapped with respect to the main body in which an operating part is provided to the surface, to an open state in which the operating part and the display part are exposed, but also to pivot closed to a position in which a mutually overlapped state occurs. Therefore, the hinge device cannot be stored flat in between the end parts of the main body and the opening and closing part as described above, and a configuration must be adopted in which attachment parts for installing the hinge device in a state of protruding upward at the end part of the main body, for example, are provided on the left and right, the hinge device provided to the end part of the opening and closing part is attached between the attachment parts, and it is possible to pivot open substantially 180° from the overlapped state.

Therefore, although the members can be mutually overlapped, since the opening and closing part is connected via the hinge device that protrudes above the end part of the main body, both open surfaces do not form a flat surface in a single plane even when pivoted 180°, and the hinge device protrudes from the end part of the main body at the base of the opening and closing part.

[Patent Document 1]: Japanese Patent Application No. 2004-243962

DISCLOSURE OF THE INVENTION

Problems to Be Solved by the Invention

Therefore, the applicants discovered endowing the hinge device with a two-shaft structure in order to create an assembly in which a overlapped state can be achieved, and the hinge device is pivoted 180° in undulating fashion so that the open surfaces are in the same plane (flat) as each other, as shown in FIG. 12B.

Specifically, by installing and connecting a parallel dual-shaft hinge device between the end part of one member and the end part of the other member, for example, a structure can be formed in which the open surface of one member becomes a flat open surface in a single plane when one member is pivoted in undulating fashion with respect to the other member by the dual shafts, and the one member is thereby pivoted open 180°, for example, from the mutually overlapped state. By also keeping the dimensions of the dual-shaft hinge device less than the plate thickness of both members, for example, an opening and closing electronic device can be created that uses a hinge device that forms a flat open surface in which there is no protruding part in the middle.

Through the use of such a dual-shaft structure, a configuration can easily be achieved in which one member can pivot 360° in undulating fashion with respect to the other member, and it is possible to pivot from a state in which one member is overlapped on one surface of the other member to a state in which one member is overlapped on the opposite surface of the other member.

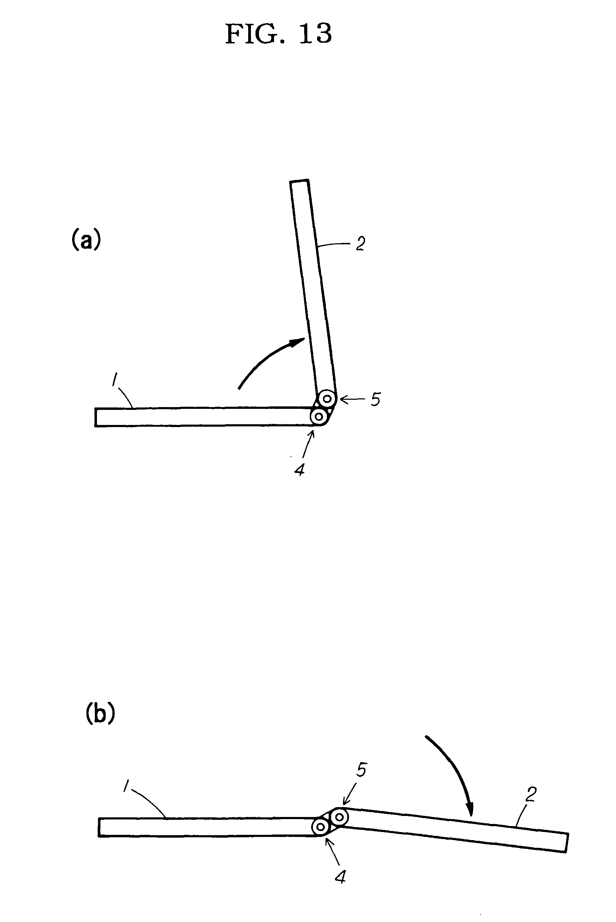

However, since each of the two shafts pivots without restriction, as shown in FIG. 13, problems occur in that one of the members wobbles with respect to the other member.

Even if a torque is generated with respect to the pivoting of each shaft so that there is no wobbling, and a "free stop" feature is provided to stop the members when the hand is removed, the shafts pivot on their own due to the dual-shaft configuration, and the members therefore cannot be smoothly pivoted to the desired position.

An object of the present invention is therefore to provide an innovative hinge device whereby the open surfaces of both members can be in the same plane without the hinge device having a protruding position in the middle when pivoted open, the hinge device can also be accommodated in substantially the same plane with the open surfaces or without protruding, wobbling and other problems due to the dual-shaft structure such as previously described are overcome, the pivoting of the two shafts of the members is substantially synchronously limited without the amount of pivoting thereof with respect to the hinge device being perfectly coordinated, and the members can be smoothly pivoted without wobbling, while making it possible for the hinge device to create a overlapped state in a dual-shaft configuration; and to provide an electronic device that uses the hinge device.

A patent application (Japanese Patent Application No. 2004-243962) has been submitted for a synchronizing means shown in FIG. 14 in which a geared connection using a gear is used in order to overcome the drawbacks of the previously described technique, but when such a gear system is used, not only does a sensation (scraping sensation) of gear meshing occur, but the cost also increases, and a middle gear is needed when the pitch between the shafts is large. This need further increases the cost, assembly is cumbersome, and mass production is compromised. Even when the pitch between shafts is constant, when the gear diameter is reduced, the middle gear is needed, the cost increases, the size of the device cannot be reduced (the handset cannot be endowed with a thin profile), and other drawbacks occur.

An object of the present invention is to also overcome the drawbacks of the gear system, to provide an even more superior and innovative hinge device in which there is a degree of freedom in the inter-shaft pitch and the amount of occupied space, the cost is unlikely to increase, size reduction can be anticipated, and other effects can be obtained.

Means for Solving the Problems

A brief description of the present invention will be given with reference to the attached drawings.

The present invention relates to a hinge device in which a second member 2 is connected so as to be able to perform an undulating pivoting motion with respect to a first member 1 from a state in which end parts of the first member 1 and second member 2 are pivotably connected to each other and overlapped, the hinge device being **characterized in that** pivot shaft parts 4 and 5 are disposed in parallel on a hinge base 3 disposed between the end part of the first member 1 and the end part of the second member 2; the hinge base 3 and the end part of the first member 1 are pivotably connected via the first pivot shaft part 4, and the hinge base 3 is disposed so as to be free to perform an undulating pivoting motion with respect to the first member 1; the hinge base 3 and the end part of the second member 2 are pivotably connected via the second pivot shaft part 5, and the second member 2 is disposed so as to be free to perform an undulating pivoting motion with respect to the hinge base 3; a first pivoting part 6 that pivots relative to the hinge base 3 or first member 1 during the undulating pivoting motion of the hinge base 3 with respect to the first member 1 is disposed on the first pivot shaft part 4; a second pivoting part 7 that pivots relative to the hinge base 3 or second member 2 during the undulating pivoting motion of the second member 2 with respect to the hinge base 3 is disposed on the second pivot shaft part 5; and a connecting link part 17 that causes the second pivoting part 7 to perform transmitted co-pivoting by the pivoting of the first pivoting part 6 is spanningly disposed between the first pivoting part 6 and the second pivoting part 7.

Furthermore, the present invention relates to the hinge device of the first aspect, **characterized in that** a construction is used in which the connecting link part 17 is spanningly disposed between the first pivoting part 6 and second pivoting part 7, and attachment parts 17B respectively attached to the first pivoting part 6 and second pivoting part 7 are disposed on a bar base 17A that pushes or pulls the second pivoting part 7 or first pivoting part 6 by the pivoting of the first pivoting part 6 or second pivoting part 7, and performs the pushing transmission or pulling transmission of one pivoting force to the other.

Furthermore, the present invention relates to the hinge device of the second aspect, **characterized in that** the attachment parts 17B are respectively disposed on either end part of the bar base 17A, which is spanningly disposed between the first pivoting part 6 and second pivoting part 7, and which assumes the shape of a rod or a plate; and the attachment positions where these attachment parts 17B are attached to the first pivoting part 6 and second pivoting part 7 are set in eccentric positions which are such that when the hinge base 3 pivots with respect to the first member 1 or the second member 2 pivots with respect to the hinge base 3 in the opening direction from the closed position where the first member 1 and second member 2 overlap to the open position by an undulating pivoting motion, the first pivoting part 6 or second pivoting part 7 undergoes a relative pivoting motion accompanying this opening pivoting motion, whereby the pivoting force is transmitted as pushing or pulling by the bar base 17A, and the second pivoting part 7 or first pivoting part 6 performs a co-pivoting motion with respect to the hinge base 3, and the hinge base 3 performs a co-pivoting motion with respect to the second member 2 or first member 1, in the same opening direction (synchronized direction).

Furthermore, the present invention relates to the hinge device of the third aspect, **characterized in that** the bar base 17A of the connecting link part 17 that is formed in a prescribed shape and spanningly disposed between the first pivoting part 6 and second pivoting part 7 is spanningly disposed in an inclined direction with respect to an inter-shaft pitch direction of the first pivoting part 6 and second pivoting part 7; and the attachment positions of the attachment parts 17B disposed on either end part of the bar base 17A are set in eccentric positions of the first pivoting part 6 and second pivoting part 7 that perform a substantially synchronized pivoting motion with the pivoting angles at which the first pivoting part 6 and second pivoting part 7 perform the co-pivoting motion being substantially the same angle.

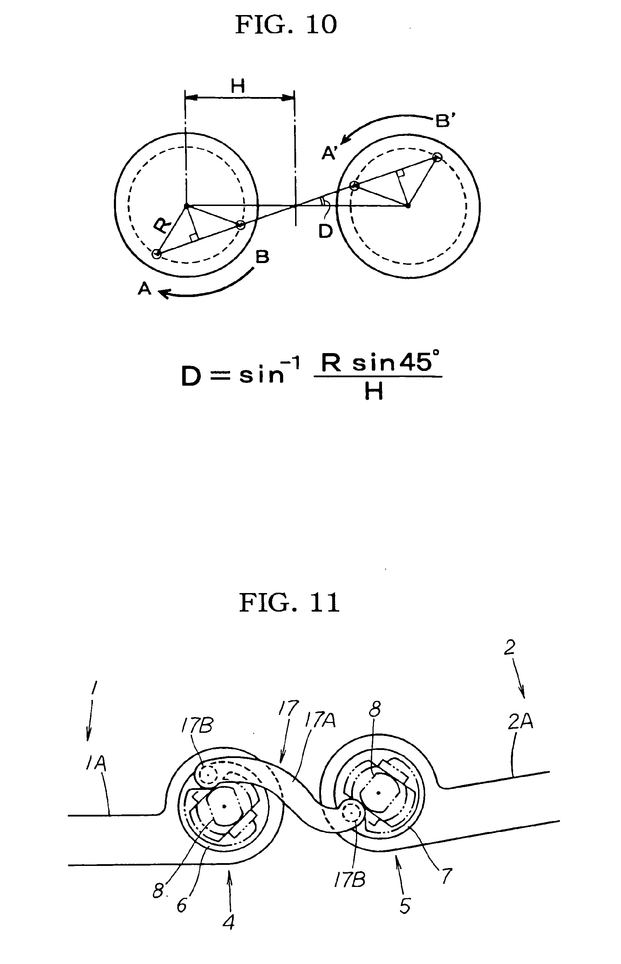

Furthermore the present invention also relates to the hinge device of the fourth aspect, **characterized in that** an angle D at which the connecting link part 17 is disposed at an inclination with respect to the inter-shaft pitch direction of the bar base 17A is set at the angle determined by the equation shown in FIG. 10 in the range of the operating angles of the respective shafts of the first pivoting part 6 and second pivoting part 7, where 2H is the pitch between the two shafts, and R is the distance from the shaft centers of the link connection points where the attachment parts 17B of the connecting link part 17 are attached (eccentric distance).

Furthermore, the present invention relates to the hinge device of any one of the third through fifth aspects, **characterized in that** the end parts of the bar base 17A of the connecting link part 17 are respectively bent in the circumferential direction of the first pivoting part 6 and second pivoting part 7, and the shape of the bar base 17A is set as a shape that does not interfere with the shafts of the first pivoting part 6 and second pivoting part 7.

Furthermore, the present invention relates to the hinge device of any one of first through fifth aspects, **characterized in that** the first pivot shaft part 4 or second pivot shaft part 5 comprises a pivot shaft 8, a bearing part 9, a cam part 10 and cam engaging part 11 that engage at a prescribed rotational position, and a spring 12 that urges the cam engagement; and either the pivot shaft 8 or bearing part 9 is disposed on the side of the first member 1 and second member 2, and the other of these two parts is disposed on the hinge base 3 that is pivotably connected thereto.

Furthermore, the present invention relates to the hinge device of the sixth aspect, **characterized in that** the first pivot shaft part 4 or second pivot shaft part 5 comprises a pivot shaft 8, a bearing part 9, a cam part 10 and cam engaging part 11 that engage at a prescribed rotational position, and a spring 12 that urges the cam engagement; and either the pivot shaft 8 or bearing part 9 is disposed on the side of the first member 1 and second member 2, and the other of these two parts is disposed on the hinge base 3 that is pivotably connected thereto.

Furthermore, the present invention relates to the hinge device of any one of the first through fifth aspects, **characterized in that** the hinge base 3 is set to at least 1.5 times the thickness of the first member 1 and second member 2 or less; the diameters of the first pivot shaft part 4, second pivot shaft part 5, first pivoting part 6, and second pivoting part 7 are also set to at least 1.5 times the thickness of the first member 1 and second member 2 or less; a protruding part that is 1.5 times the thickness of the respective members 1, 2 or greater is not generated in the pivot-connecting parts of the first member 1 and second member 2 in an open state in which the second member 2 is opened by 150° or greater with respect to the first member 1; a construction is obtained wherein a substantially flat open surface connecting the open surfaces of the respective members is connected and formed by the first member 1 and second member 2; and a construction is obtained wherein the open surfaces of the first member 1 and second member 2 can pivot closed to an overlapped state in which these open surfaces are joined.

Furthermore, the present invention also relates to the hinge device of the sixth aspect, **characterized in that** the hinge base 3 is set to at least 1.5 times the thickness of the first member 1 and second member 2 or less; the diameters of the first pivot shaft part 4, second pivot shaft part 5, first pivoting part 6, and second pivoting part 7 are also set to at least 1.5 times the thickness of the first member 1 and second member 2 or less; a protruding part that is 1.5 times the thickness of the respective members 1, 2 or greater is not generated in the pivot-connecting parts of the first member 1 and second member 2 in an open state in which the second member 2 is opened by 150° or greater with respect to the first member 1; a construction is obtained wherein a substantially flat open surface connecting the open surfaces of the respective members is connected and formed by the first member 1 and second member 2; and a construction is obtained wherein the open surfaces of the first member 1 and second member 2 can pivot closed to an overlapped state in which these open surfaces are joined.

Furthermore, the present invention also relates to the hinge device of the seventh aspect, **characterized in that** the hinge base 3 is set to at least 1.5 times the thickness of the first member 1 and second member 2 or less; the diameters of the first pivot shaft part 4, second pivot shaft part 5, first pivoting part 6, and second pivoting part 7 are also set to at least 1.5 times the thickness of the first member 1 and second member 2 or less; a protruding part that is 1.5 times the thickness of the respective members 1, 2 or greater is not generated in the pivot-connecting parts of the first member 1 and second member 2 in an open state in which the second member 2 is opened by 150° or greater with respect to the first member 1; a construction is obtained wherein a substantially flat open surface connecting the open surfaces of the respective members is connected and formed by the first member 1 and second member 2; and a construction is obtained wherein the open surfaces of the first member 1 and second member 2 can pivot closed to an overlapped state in which these open surfaces are joined.

Furthermore, the present invention also relates to the hinge device of the eighth aspect, **characterized in that** the hinge base 3 is set to at least 1.5 times the thickness of the first member 1 and second member 2 or less; the diameters of the first pivot shaft part 4, second pivot shaft part 5, first pivoting part 6, and second pivoting part 7 are also set to at least 1.5 times the thickness of the first member 1 and second member 2 or less; a protruding part that is 1.5 times the thickness of the respective members or greater is not generated in the pivot-connecting parts of the first member 1 and second member 2 in an open state in which the second member 2 is opened by 150° or greater with respect to the first member 1; a construction is obtained wherein a substantially flat open surface connecting the open surfaces of the respective members is connected and formed by the first member 1 and second member 2; and a construction is obtained wherein the open surfaces of the first member 1 and second member 2 can pivot closed to an overlapped state in which these open surfaces are joined.

Furthermore, the present invention also relates to electronic device using a hinge device, **characterized in that** a main body part is a first member 1 or second member 2; an opening and closing part that overlaps with the main body part is the second member 2 or first member 1; and the main body part 1 and opening and closing part 2 are pivotably connected by the hinge device according to any one of aspects 1 through 12.

Effect of the Invention

Because the present invention is configured as described above, an innovative hinge device and an electronic device that uses the hinge device are provided whereby a second member can pivot open in undulating fashion with respect to a first member from a state in which the first member and the second member are mutually overlapped; the hinge device can pivotally attach both members and be accommodated between both members so that a protruding part or a stepped part does not occur in the middle even when the open surfaces of the members are straight open or at a right angle when the members are pivoted open; the members can be pivoted closed into a mutually overlapped state while being configured so as also to form a flat open surface as previously described when the members are pivoted open, due to the dual-shaft structure being disposed between the members; and even though a dual-shaft structure is employed, co-pivoting is created by a connecting link part bridged between pivoting parts that move in conjunction with the pivoting of each member, whereby the pivoting of each shaft is restricted, the pivoting of both members is substantially synchronized, and the members can smoothly pivot to the desired angle without wobbling.

In the present invention, since the synchronization of the shafts by co-pivoting is accomplished by a link system using the connecting link part for bridging between the pivoting parts of the shafts rather than by a gear system (there are, however, cases in which complete synchronization is not achieved, as in a gear system), an even more superior and innovative hinge device and electronic device that uses the hinge device are obtained in which the drawbacks of the aforementioned gear system are overcome, there is a degree of freedom in the inter-shaft pitch and the amount of occupied space, the cost is unlikely to increase, size reduction can be anticipated, and other effects can be obtained.

In the invention according to the second and third aspects, a configuration whereby the operations/effects of the present invention are reliably demonstrated can easily be obtained, and an even more practically superior hinge device is obtained.

In the invention according to the fourth aspect, through the designed setting of the spanningly disposed position of the connecting link part, i.e., the attachment eccentricity position, the co-pivoting angles, though not completely synchronized, will be substantially the same with no significant variation even if perfect synchronization is not achieved, and the co-pivoting is substantially synchronized to the extent possible.

In the invention according to the fifth aspect, the pivoting (co-pivoting) is substantially synchronized and nearly completely synchronized, optimization is achieved, force, for example, is transmitted in the same conditions in the opening direction and the closing direction, and the difference (difference in the angle of motion of both shafts) of the co-pivoting angle can be minimized (although the angles are not exactly the same, and there is not a complete synchronization, the angle difference is minimized, and near-complete synchronization is achieved).

In the invention according to the sixth aspect, by making the link shape (shape of the bar base of the connecting link part) that of an S, for example, an even more excellent hinge device is obtained, in which there is no interference between shafts, the production properties of the connecting link part can be enhanced, and other effects are obtained.

In the invention according to the seventh and eighth aspects, an even more innovative hinge device is obtained in which click retention of the pivot position is enabled by engaging a cam in a prescribed pivot position, and by engaging the cam partway in the overlapped state, biasing is achieved when the unit is closed, and a "free stop" feature can be provided by setting the pivot resistance generated by spring force.

In the invention according to the ninth through twelfth aspects, a second member can be pivoted open 150° or more with respect to a first member so that the first member and the second member are placed in a connected open state straight open or at a right angle from a closed state in which the members are mutually overlapped, the open surfaces of the first member and the second member in this configuration are connected in a single plane, and there is no large protruding part or stepped part in between the members.

In the invention according to the thirteenth aspect, an electronic device is obtained that uses the excellent hinge device for demonstrating the aforementioned operations/effects.

BRIEF DESCRIPTION OF THE DRAWINGS

FIG. 1 is an explanatory perspective view of the present embodiment;

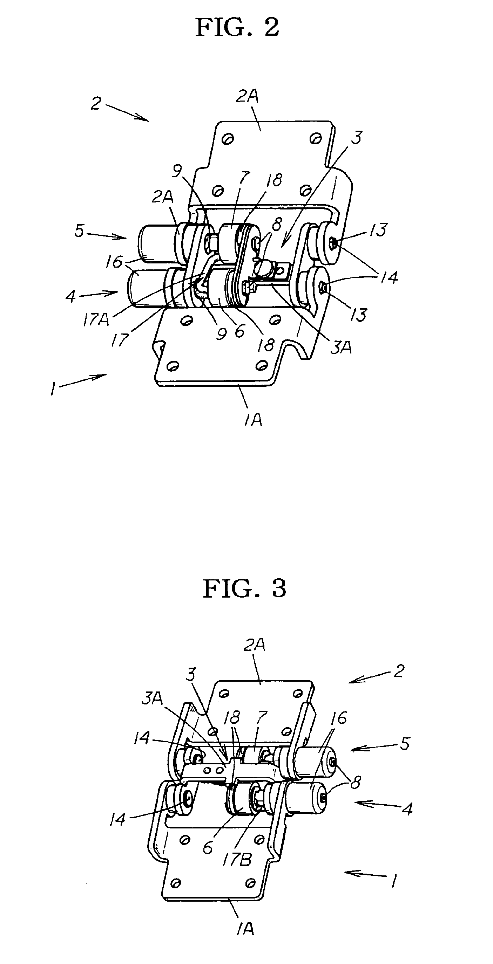

FIG. 2 is a perspective view of the hinge device of the present embodiment (in a state in which the device is installed in the center frame with the respective attachment frames attached);
FIG. 3 is a perspective view seen from the back side of FIG. 2;

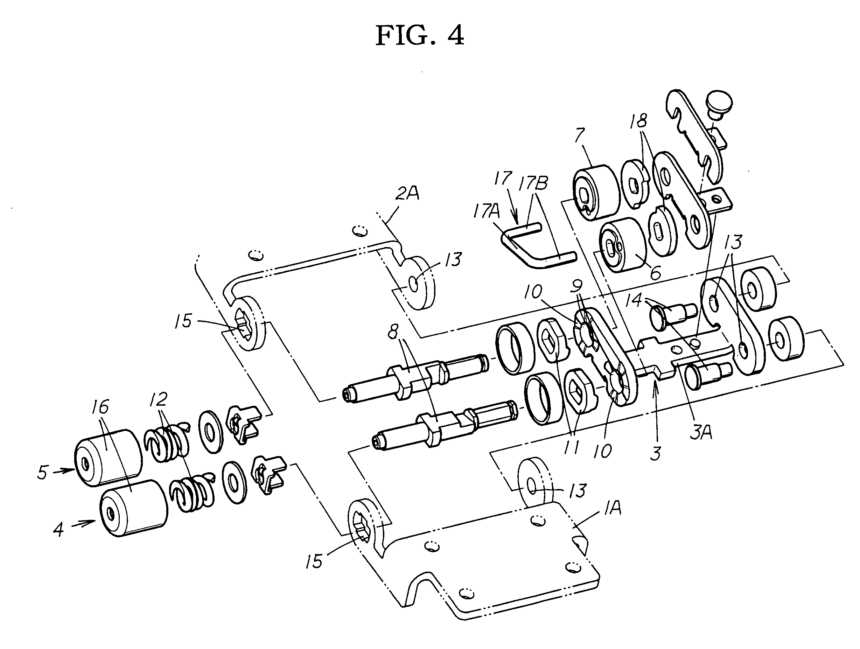

FIG. 4 is an explanatory perspective view of the present embodiment;

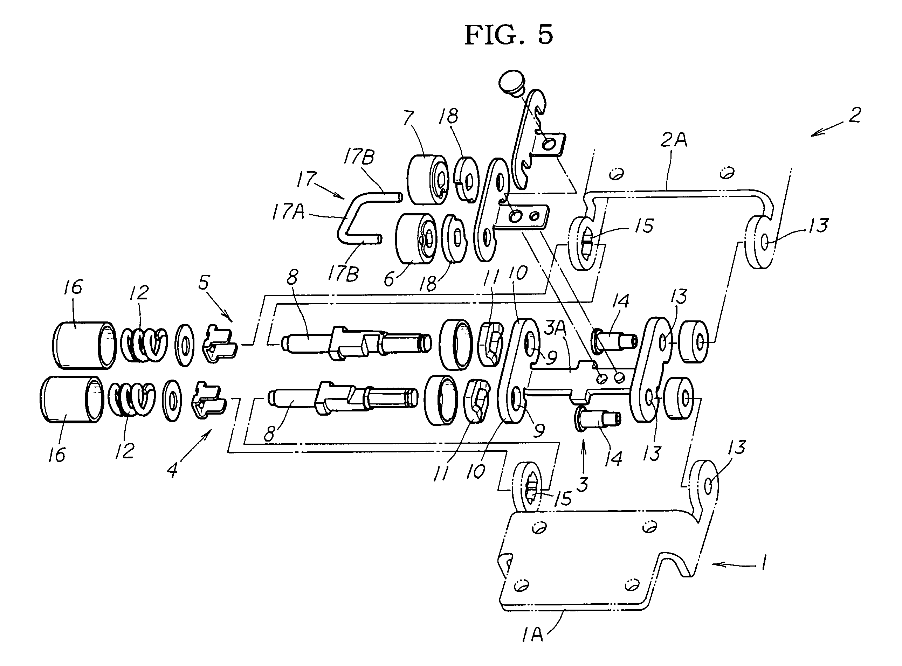

FIG. 5 is an explanatory perspective view seen from a different direction in FIG. 4;

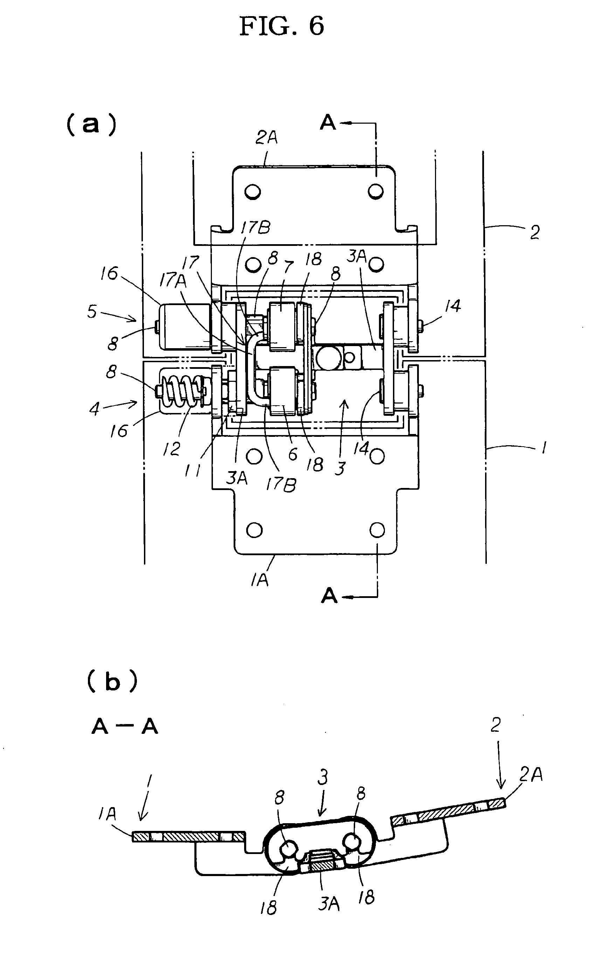

FIG. 6 shows an explanatory plan view (a) of the essential parts of the present embodiment, and an explanatory sectional view (b) along line A-A;
FIG. 7 is an explanatory sectional view showing the operation of the essential parts in a closed state;
FIG. 8 is an explanatory sectional view showing the operation of the essential parts during the undulating pivoting of the present embodiment;
FIG. 9 is an explanatory sectional view showing the operation of the essential parts of the present embodiment in a 170-degree open state;
FIG. 10 shows an explanatory diagram indicating the angle of inclination D that achieves optimization of the connecting link part, and an explanatory diagram showing the formula used to determine the angle of inclination D;
FIG. 11 is an explanatory sectional view showing the operation of another example in which the bar base of the connecting link part in the present embodiment is formed in the shape of the letter "S";
FIG. 12 shows an explanatory diagram (a) showing the presence of a protruding part in the intermediate part of a conventional overlapping opening and closing type;
FIG. 13 is an explanatory diagram showing the problem of unsteadiness and the inability to pivot smoothly in the case of a hinge device having a dual-shaft construction; and

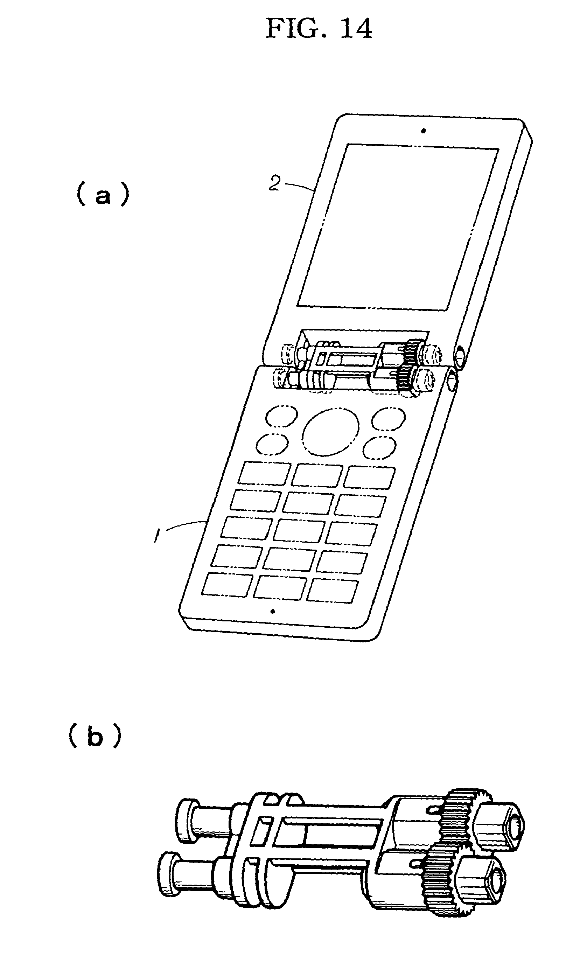

FIG. 14 is an explanatory perspective view (a) of the gear system in Japanese Patent Application No. 2004-243962, and a perspective view of the essential parts.

BEST MODE FOR CARRYING OUT THE INVENTION

Preferred embodiments (the manner in which the present invention is implemented) of the present invention are briefly described below with reference to the diagrams while indicating the effects of the present invention.

A hinge base 3 is disposed between a first member 1 and a second member 2. The end part of the first member 1 and the hinge base 3 are pivotably connected via a first pivot shaft part 4, and the hinge base 3 and the end part of the second member 2 are pivotably connected via a second pivot shaft part 5. The first member 1 is disposed on the intermediate part of the hinge base 3 via the first pivot shaft part 4 so that the first member 1 is free to perform an undulating pivoting motion, and the second member 2 is disposed on the hinge base 3 via the second pivot shaft part 5 so that the second member 2 is free to perform an undulating pivoting motion.

Accordingly, the second member 2 is free to perform an undulating pivoting motion with respect to the first member via two shafts (the first pivot shaft part 4 and second pivot shaft part 5).

Accordingly, by setting a dimension such as the distance between the two parallel shafts; i.e., the length of the hinge base 3, then even if a design is envisioned such that the hinge base 3 provided with the two shafts is disposed between the first member 1 and the second member 2, and the first member 1 and second member 2 open flat without any protruding part or stepped part present on the opened surface, as shown in FIG. 12B, the hinge base 3 will pivot in accordance with the pivoting of the two shafts, and the position of the two parallel shafts will pivot with respect to the first member 1. This will enable pivoting in a state with the first member 1 and second member 2 in an overlapped state.

The hinge base 3 provided with two shafts is disposed so as to be accommodated within the plate thickness of both members 1, 2, between the end parts of the plate-shaped (for example) first member 1 and the plate-shaped second member 2, and the shafts (first pivot shaft part 4, second pivot shaft part 5) and the members (first member 1, second member 2) are pivotally attached to each other, whereby the first member 1 and the second member 2 can be pivoted open from a state of mutual overlap, the first member 1 and the second member 2 can be closed in a overlapped state without a shaft or bearing part, or an attachment part for installing the hinge device protruding upward from the upper surface of the end of either the first member 1 or the second member 2, as in the prior art, and a part can be almost completely prevented from protruding in the middle region.

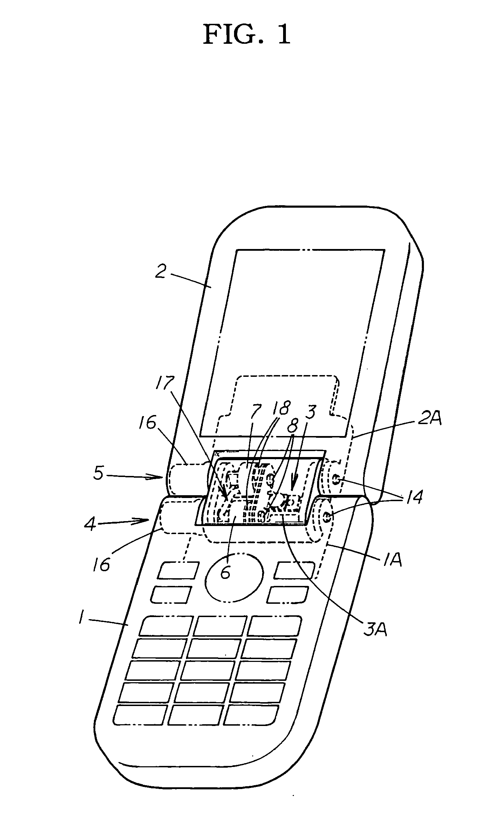

Specifically, by making it possible for the second member 2 to pivot open 150 to 180° (e.g., 170°) with respect to the first member 1 as shown in FIGS. 1, 7, and 9, for example, a hinge device can be obtained that is capable of closing in a overlapped state while being configured so that a flat, continuously open surface is formed in which no part protrudes in the middle region.

In the present invention, a configuration is adopted in which a first pivoting part 6 for pivoting (pivoting relative to the first member 1 or the hinge base 3) in conjunction with the pivoting of the hinge base 3 with respect to the first member 1 is provided to the first pivot shaft part 4, and a second pivoting part 7 for pivoting (pivoting relative to the hinge base 3 or the second member 2) in conjunction with the pivoting of the second member 2 with respect to the hinge base 3 is provided to the second pivot shaft part 5; the first pivoting part 6 and the second pivoting part 7 are connected to each other by the connecting link part 17, and when one member pivots, the pivoting is transmitted so that the other member co-pivots (pivots synchronously). Therefore, the individual shafts (the first pivot shaft part 4 and the second pivot shaft part 5) do not unrestrictedly pivot by themselves, but always pivot substantially synchronously (the synchronization is sometimes not complete as that of a gear system, but the members co-pivot in at least the same undulating pivot direction).

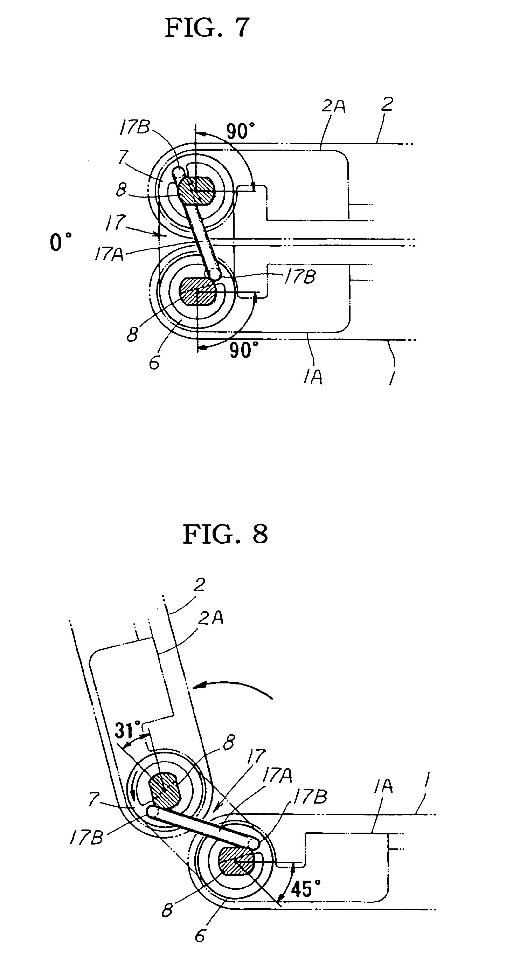

Specifically, the shafts do not pivot by themselves, and the pivoting of the first pivot shaft part 4 always results in the pivoting of the second pivot shaft part 5 due to the first pivoting part 6 and second pivoting part 7 being connected by the connecting link part 17, and since the second member 2 always pivots relative to the hinge base 3 in conjunction with the pivoting of the first member 1 relative to the hinge base 3 as shown in FIGS. 7, 8, and 9, when the second member 2 is pivoted with respect to the first member 1 via the hinge base 3 that is provided with two shafts, the members can be smoothly pivoted to the desired position without wobbling.

[Examples]

Specific examples of the present invention will be described based on the drawings.

The present example shown in the drawings is an example for making the present invention easy to understand, is a camera-equipped mobile telephone or folding closable digital camera to which the present invention is applied to achieve overlapped compactness, and has a configuration in which an operating part that functions as a keyboard in which number keys, function keys, or the like are arranged is provided to the upper surface of a plate-shaped main body 1 as a first member 1, in which a circuit board, a power supply, and other electronic components are housed inside a case, and a plate-shaped overlapped part 2 as a second member 2 having the same shape for overlapping on the first member 1 and covering the operating part is pivotably attached and connected by a hinge device so as to be able to pivot in undulating fashion.

Specifically, the present example is of a hinge device in which a second member 2 is connected to a first member 1 so that the second member 2 can perform an undulating pivoting motion from a state in which the end parts of the first member 1 and second member 2 are pivotably connected to each other and overlapped, wherein pivot shaft parts 4, 5 are disposed in parallel on a hinge base 3 disposed between the end part of the first member 1 and the end part of the second member 2 and in the same plane as both members 1, 2; the end parts of the first pivot shaft part 4 and the first member 1 are pivotably connected to each other; the first member 1 can pivot in undulating fashion; the end parts of the second pivot shaft part 5 and the second member 2 are pivotably connected to each other; and the second member 2 can pivot in undulating fashion.

Specifically, a center frame 3A serving as the hinge base 3 is disposed between a first attachment part 1A (attachment frame 1A) attached to the first member 1, and a second attachment part 2A (attachment frame 2A) attached to the second member 2; and the center frame 3A and the members 1, 2 (attachment frames 1A, 2A) are pivotably attached (pivotably connected) to each other via the first pivot shaft part 4 and the second pivot shaft part 5, respectively.

Furthermore, a first pivoting part 6 that pivots relative to the hinge base 3 during the undulating pivoting motion of the hinge base 3 (center frame 3A) with respect to the first member 1 (attachment frame 1A) is provided to a pivot shaft 8 of the first pivot shaft part 4; a second pivoting part 7 that pivots relative to the hinge base 3 during the undulating pivoting motion of the second member 2 (attachment frame 2A) with respect to the hinge base 3 (center frame 3A) via the second pivot shaft part 5 is provided to the pivot shaft 8 of the second pivot shaft part 5; the first pivoting part 6 and the second pivoting part 7 are connected in a bridged state by the connecting link part 17; and the pivoting of the first pivoting part 6 causes the second pivoting part 7 to perform transmitted co-pivoting.

Specifically, the hinge base 3 has substantially the same thickness as the first member 1 and the second member 2; the diameters of the first pivot shaft part 4, the second pivot shaft part 5, the first pivoting part 6, and the second pivoting part 7 are also substantially the same as the thickness of the first member 1 and second member 2; and the pivot shaft parts 4, 5 are provided in parallel fashion to the hinge base 3 on the side of the first member 1 and the second member 2, respectively. In an open state in which the second member 2 is opened 170°, for example, with respect to the first member 1, a protruding part at least 1.5 times or more of the thickness of the members 1, 2 will not be formed at the pivot-connection portion between the first member 1 and the second member 2; a substantially flat open surface is continuously formed by the first member 1 and the second member; and the open surfaces of the first member 1 and the second member 2 can also be pivoted closed to a mutually overlapped state.

The arrangement shall be described further below. The connecting link part 17 assumes that shape of a bar or plate, is spanningly disposed between the first pivoting part 6 and second pivoting part 7, and has attachment parts 17B respectively provided to either end of the bar base 17A, which itself assumes the shape of a straight line, the letter "S," or another prescribed form. The connecting link part is configured such that pivoting of the first pivoting part 6 or second pivoting part 7 pushes or pulls the second pivoting part 7 or first pivoting part 6, and performs a pushing transmission or pulling transmission of one pivoting force to the other.

Specifically, the positions where the attachment parts 17B are attached to the first pivoting part 6 and second pivoting part 7 are set eccentrically, such that when the hinge base 3 pivots with respect to the first member 1 or the second member 2 pivots with respect to the hinge base 3 in the opening direction from the closed position, where the first member 1 and second member 2 overlap, to the open position by an undulating pivoting motion, the first pivoting part 6 or second pivoting part 7 undergoes a relative pivoting motion accompanying this opening pivoting motion. As a result, the pivoting force is transmitted as pushing or pulling by the bar base 17A, and the second pivoting part 7 or first pivoting part 6 performs a co-pivoting motion, with the second member 2 or the hinge base 3 being synchronized in the same opening direction with respect to the hinge base 3 and the first member 1, respectively.

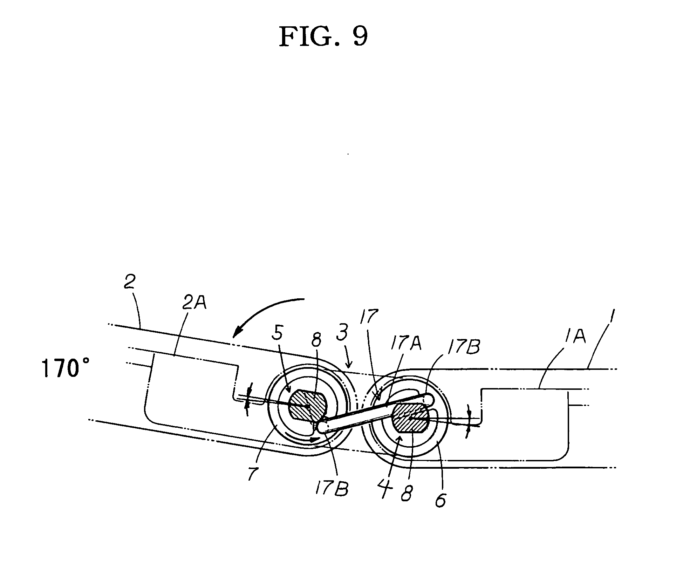

Accordingly, when the second member 2 is to pivot with respect to the first member 1 from a 170° opening state such as that shown in FIG. 9, then if the second member 2 is pivoted 31° with respect to the hinge base 3 around the second pivot shaft part 5, as shown in FIG. 8, the hinge base 3 will also pivot 45° with respect to the first member 1 in substantial synchronization in the synchronization direction, despite not being in perfect synchronization around the first pivot shaft part 4. Ultimately, when one side pivots 90° due to synchronization pivoting, the other side will also pivot 90° due to synchronization pivoting, and the second member 2 will pivot 170° with respect to, and accordingly overlap, the first member 1, as shown in FIG. 7.

The arrangement shall be described in still further detail below. The bar base 17A of the connecting link part 17, which is formed in a prescribed shape and is spanningly disposed between the first pivoting part 6 and the second pivoting part 7, is spanningly disposed in an inclined direction with respect to the pitch direction between the axes of the first pivoting part 6 and the second pivoting part 7. The attachment positions of the attachment parts 17B disposed on either end part of the bar base 17A are set in eccentric positions of the first pivoting part 6 and second pivoting part 7 that perform a substantially synchronized pivoting motion, with the pivoting angles at which the first pivoting part 6 and second pivoting part 7 perform the co-pivoting motion being substantially the same angle.

Specifically, an angle D at which the connecting link part 17 is disposed in an inclined direction with respect to the inter-shaft pitch direction of the bar base 17A of the connecting link part 17 is set at the angle determined by the formula shown in FIG. 10, in the range of the operating angles of the respective shafts of the first pivoting part 6 and second pivoting part 7, where 2H is the pitch between the two shafts, and R is the distance from the shaft centers of the link connection points where the attachment parts 17B of the connecting link part 17 are attached (eccentric distance).

Accordingly, through the designed setting of the spanningly disposed position of the connecting link part; i.e., the attachment eccentricity position, the co-pivoting angles, though not completely synchronized, will be substantially the same with no significant variation even if perfect synchronization is not achieved, and the co-pivoting is substantially synchronized to the extent possible.

By optimizing the angle D, the pivoting (co-pivoting) is substantially synchronized and nearly completely synchronized, co-pivoting optimization is achieved, force, for example, is transmitted in the same conditions in the opening direction and the closing direction, and the difference (difference in the angle of motion of both shafts) of the co-pivoting angle can be minimized (although the angles are not exactly the same, and there is not a complete synchronization, the angle difference is minimized, and near-complete synchronization is achieved).

FIG. 10 shows the formula used to achieve the optimization. Using the formula enables the balance of forces to be optimized, and angular variation to be optimized at a maximum of 45° and 42.7°.

These angles can change depending on how the parameters of the formula are set.

As indicated by the separate example shown in FIG. 11, the end parts of the bar base 17A of the connecting link part 17 are respectively bent in the circumferential direction of the first pivoting part 6 and second pivoting part 7; and a shape may be set so as not to interfere with the shafts of the first pivoting part 6 and second pivoting part 7. Specifically, both ends of the bar base 17A may be bent around the axes and set in the shape of the letter "S."

Accordingly, forming such a shape allows an even more exceptional hinge device to be obtained; e.g., no interference will occur between the shafts, the production properties of the connecting link part 17 will be enhanced, and other effects can be obtained.

The first pivot shaft part 4 and second pivot shaft part 5 comprise a pivot shaft 8, a bearing part 9, a cam part 10 and cam engaging part 11 that engage at a prescribed rotational position, and a spring 12 that urges the cam engagement; and either the pivot shaft 8 or bearing part 9 is disposed on the side of the first member 1 and second member 2, and the other of these two parts is disposed on the hinge base 3 that is pivotably connected thereto.

The arrangement shall be provided in further detail below. The present embodiment is provided with the hinge base 3 (center frame 3A), which has two shafts (first pivot shaft part 4 and second pivot shaft part 5), and assumes a substantially coplanar configuration with attachment frame 1A and attachment frame 2A, each of which being attached between an end of the first member 1 and an end of the second member 2 as described above. A more detailed description shall be provided below for the dual-shaft hinge base 3 (center frame 3A; also referred to as a "middle cavity") of the present embodiment, as well as the first pivot shaft part 4, second pivot shaft part 5, first pivoting part 6, second pivoting part 7, and connecting link part 17 incorporated therewith.

The first pivot shaft part 4 and second pivot shaft part 5 are provided in a parallel state on either side of the hinge base 3. The hinge base 3 is of substantially the same thickness as the first member 1 and second member 2, and assumes a substantially co-planar state with the first member 1 and second member 2. The first pivot shaft part 4 and second pivot shaft part 5 are of identical construction.

Specifically, the shaft parts 4, 5 are shaft parts separated along a longitudinal direction. One set of shaft parts merely comprises single-sided shaft parts 14 (dummy shafts), which are inserted into and supported by bearings 13 (shaft holes) provided on an end of one side of each of the first member 1 (attachment frame 1A) and the second member 2 (attachment frame 2A), and by bearings 13 (shaft holes) provided on an end of one side of the hinge base 3 (center frame 3A). The shaft parts on the opposite side comprise a pivot shaft 8, a bearing 9, a cam part 10 (static cam 10), and a cam engaging part 11 that engages at a prescribed pivot position by the urging of a spring, as described above.

Specifically, according to the present embodiment, an irregularly shaped part is formed on a side surface of the bearing 9 (shaft hole) provided on the opposite side end of the hinge base 3, with the static cam 10 being integrally provided on the bearing 9. The pivot shaft 8 is inserted into and supported by the bearing 9 with which the static cam 10 is integrated, and the pivot shaft 8 engages with and is made to stop pivoting by a pivot-preventing attachment part 15 (fixed hole) provided to an end on the opposite side of the first member 1 (attachment frame 1A) and the second member 2 (attachment frame 2A; i.e., the side laterally opposite the bearing 13).

The movable cam 11, which falls into and engages with the irregular parts of the static cam 10 at a prescribed pivot angle in a state of being urged by the spring 12, is provided in a slidably pivot-preventing state on the pivot shafts 8, which are secured so as to be prevented from pivoting in the first member 1 (attachment frame 1A) and the second member 2 (attachment frame 2A), and are pivotably supported by the hinge base 3 (center frame 3A). A guide tube 16 for accommodating the spring 12 and slidably guiding the movable cam 11 to connect with or disconnect from the static cam 10 is provided to the pivot shaft 8.

The arrangement shall be described in further detail below. The hinge base 3 is thus configured to link the two shafts to the attachment frames 1A, 2A of the first member 1 and second member 2 via the first pivot shaft part 4 and second pivot shaft part 5. The bearing 13 for supporting the single-sided shaft part 14 protrudes from the attachment frame 1A and attachment frame 2A on one side in the lateral direction; and the pivot-preventing attachment part 15 to which the pivot shaft 8 is attached likewise protrudes from the opposite side. The shaft part 14 and the bearing 9 with which the static cam 10 is integrated, which protrude from the hinge base 3 in the longitudinal direction, are disposed between the bearing 13 and the pivot-preventing attachment part 15. The pivot shafts 8 are attached to the pivot-preventing attachment part 15 of the first member 1 (attachment frame 1A) and the second member 2 (attachment frame 2A), and are pivotably supported by the bearing 9 of the hinge base 3.

Each of the first pivoting part 6 and second pivoting part 7 is provided in a state of being prevented from pivoting around the pivot shaft 8 to a distal end part (penetrating part) of the pivot shaft 8 inserted into the bearing 9.

Specifically, the pivot shafts 8, which are provided to the bearings 9 disposed on the hinge base 3 on the first member 1 side and second member 2 side, respectively, are inserted into and pivotably supported by the first pivot shaft part 4 and second pivot shaft part 5, which are provided forward and rearward with respect to the hinge base 3, in parallel to one another. However, link rollers used as the first pivoting part 6 and the second pivoting part 7 respectively engage with the pivot shafts 8 between the bearing 9 and the bearing 13 of the hinge base 3 so as to be prevented from pivoting.

Accordingly, when the hinge base 3 pivots with respect to the first member 1, the hinge base 3 pivots with respect to the pivot shaft 8 associated with the first pivot shaft part 4; and the first pivoting part 6, which is integrated with this pivot shaft 8, also pivots correspondingly with respect to the hinge base 3.

When the second member 2 pivots with respect to the hinge base 3, the pivot shaft 8 associated with the second pivot shaft part 5 pivots with respect to the hinge base 3; and the second pivoting part 7, which is integrated with this pivot shaft 8, also pivots with respect to the hinge base 3.

The first pivoting part 6 and second pivoting part 7, which are disposed adjacently (in parallel) to the fore and rear of the present embodiment, are linked by the connecting link part 17. However, the bar base 17A, which assumes the form of a rod or S-shaped plate, is spanningly provided in the embodiment, as described above. The attachment parts 17B provided in a bent state to either end of the bar base 17A are inserted into and securely connected within the attachment holes provided in the optimal eccentric positions of the first pivoting part 6 and second pivoting part 7. The respective pivoting forces are transmitted by the bar base 17A, so as to yield substantially synchronized pivoting (transmitted co-pivoting).

Stoppers (stopper plates) 18 that prevent over-pivoting are provided in a pivoting-prevented state on an end of each of the pivot shafts 8, and are disposed in parallel with the first pivoting part 6 and the second pivoting part 7, respectively. Contact is made with the stoppers when over-pivoting is about to occur during the opening of the unit, whereby over-pivoting is prevented.

Accordingly, when a cellular telephone such as the one shown in FIG. 1 is pivoted open to a 170° angle, the main unit 1 and the opening/closing part 2 will open completely flat to resemble a substantially single flat plate. The intermediate region will also be devoid of any protruding part or stepped part. Moreover, the cam engagement mechanism (the static cam 10, the movable cam 11, and the spring 12, and the like) provided to one of either the first pivot shaft part 4 or second pivot shaft part 5 provides a "free stop" feature, biasing when the unit is closed, or multi-position registering (click-engagement).

The present invention shall not be limited to the present embodiment, with the specific structures of each of the constituting elements thereof able to be designed as deemed suitable for use.

## Claims

1. A hinge device in which a second member is connected so as to be able to perform an undulating pivoting motion with respect to a first member from a state in which end parts of the first member and second member are pivotably connected to each other and overlapped, the hinge device being **characterized in that** pivot shaft parts are disposed in parallel on a hinge base disposed between the end part of the first member and the end part of the second member; the hinge base and the end part of the first member are pivotably connected via the first pivot shaft part, and the hinge base is disposed so as to be free to perform an undulating pivoting motion with respect to the first member; the hinge base and the end part of the second member are pivotably connected via the second pivot shaft part, and the second member is disposed so as to be free to perform an undulating pivoting motion with respect to the hinge base; a first pivoting part that pivots relative to the hinge base or first member during the undulating pivoting motion of the hinge base with respect to the first member is disposed on the first pivot shaft part; a second pivoting part that pivots relative to the hinge base or second member during the undulating pivoting motion of the second member with respect to the hinge base is disposed on the second pivot shaft part; and a connecting link part that causes the second pivoting part to perform transmitted co-pivoting by the pivoting of the first pivoting part is spanningly disposed between the first pivoting part and the second pivoting part.

2. The hinge device according to claim 1, **characterized in that** a construction is used in which the connecting link part is spanningly disposed between the first pivoting part and second pivoting part, and attachment parts respectively attached to the first pivoting part and second pivoting part are disposed on a bar base that pushes or pulls the second pivoting part or first pivoting part by the pivoting of the first pivoting part or second pivoting part, and performs the pushing transmission or pulling transmission of one pivoting force to the other.

3. The hinge device according to claim 2, **characterized in that** the attachment parts are respectively disposed on either end part of the bar base, which is spanningly disposed between the first pivoting part and second pivoting part, and which assumes the shape of a rod or a plate; and the attachment positions where these attachment parts are attached to the first pivoting part and second pivoting part are set in eccentric positions which are such that when the hinge base pivots with respect to the first member or the second member pivots with respect to the hinge base in the opening direction from the closed position where the first member and second member overlap to the open position by an undulating pivoting motion, the first pivoting part or second pivoting part undergoes a relative pivoting motion accompanying this opening pivoting motion, whereby the pivoting force is transmitted as pushing or pulling by the bar base, and the second pivoting part or first pivoting part performs a co-pivoting motion with respect to the hinge base, and the hinge base performs a co-pivoting motion with respect to the second member or first member, in the same opening direction (synchronized direction).

4. The hinge device according to claim 3, **characterized in that** the bar base of the connecting link part that is formed in a prescribed shape and spanningly disposed between the first pivoting part and second pivoting part is spanningly disposed in an inclined direction with respect to an inter-shaft pitch direction of the first pivoting part and second pivoting part; and the attachment positions of the attachment parts disposed on either end part of the bar base are set in eccentric positions of the first pivoting part and second pivoting part that perform a substantially synchronized pivoting motion with the pivoting angles at which the first pivoting part and second pivoting part perform the co-pivoting motion being substantially the same angle.

5. The hinge device according to claim 4, **characterized in that** an angle D at which the connecting link part is disposed in an inclined direction with respect to the inter-shaft pitch direction of the bar base is set at the angle determined by

[Equation 1]

$$D = \sin^{-1}\frac{R\,\sin 45°}{H}$$

in the range of the operating angles of the respective shafts of the first pivoting part and second pivoting part, where 2H is the pitch between the two shafts, and R is the distance from the shaft centers of the link connection points where the attachment parts of the connecting link part are attached (eccentric distance).

6. The hinge device according to any one of claims 3 through 5, **characterized in that** the end parts of the bar base of the connecting link part are respectively bent in the circumferential direction of the first pivoting part and second pivoting part; and the shape of the bar base is set as a shape that does not interfere with the shafts of the first pivoting part and second pivoting part.

7. The hinge device according to any one of claims 1 through 5, **characterized in that** the first pivot shaft part or second pivot shaft part comprises a pivot shaft, a bearing part, a cam part and cam engaging part that engage at a prescribed rotational position, and a spring that urges the cam engagement; and either the pivot shaft or bearing part is disposed on the first member and second member, and the other of these two parts is disposed on the hinge base that is pivotably connected thereto.

8. The hinge device according to claim 6, **characterized in that** the first pivot shaft part or second pivot shaft part comprises a pivot shaft, a bearing part, a cam part and cam engaging part that engage at a prescribed rotational position, and a spring that urges the cam engagement; and either the pivot shaft or bearing part is disposed on the side of the first member and second member, and the other of these two parts is disposed on the hinge base that is pivotably connected thereto.

9. The hinge device according to any one of claims 1 through 5, **characterized in that** the hinge base is set to at least 1.5 times the thickness of the first member and second member or less; the diameters of the first pivot shaft part, second pivot shaft part, first pivoting part, and second pivoting part are also set to at least 1.5 times the thickness of the first member and second member or less; a protruding part that is 1.5 times the thickness of the respective members or greater is not generated in the pivot-connecting parts of the first member and second member in an open state in which the second member is opened by 150° or greater with respect to the first member; a construction is obtained wherein a substantially flat open surface connecting the open surfaces of the respective members is connected and formed by the first member and second member; and a construction is obtained wherein the open surfaces of the first member and second member can pivot closed to an overlapped state in which these open surfaces are joined.

10. The hinge device according to claim 6, **characterized in that** the hinge base is set to at least 1.5 times the thickness of the first member and second member or less; the diameters of the first pivot shaft part, second pivot shaft part, first pivoting part, and second pivoting part are also set to at least 1.5 times the thickness of the first member and second member or less; a protruding part that is 1.5 times the thickness of the respective members or greater is not generated in the pivot-connecting parts of the first member and second member in an open state in which the second member is opened by 150° or greater with respect to the first member; a construction is obtained wherein a substantially flat open surface connecting the open surfaces of the respective members is connected and formed by the first member and second member; and a construction is obtained wherein the open surfaces of the first member and second member can pivot closed to an overlapped state in which these open surfaces are joined.

11. The hinge device according to claim 7, **characterized in that** the hinge base is set to at least 1.5 times the thickness of the first member and second member or less; the diameters of the first pivot shaft part, second pivot shaft part, first pivoting part, and second pivoting part are also set to at least 1.5 times the thickness of the first member and second member or less; a protruding part that is 1.5 times the thickness of the respective members or greater is not generated in the pivot-connecting parts of the first member and second member in an open state in which the second member is opened by 150° or greater with respect to the first member; a construction is obtained wherein a substantially flat open surface connecting the open surfaces of the respective members is connected and formed by the first member and second member; and a construction is obtained wherein the open surfaces of the first member and second member can pivot closed to an overlapped state in which these open surfaces are joined.

12. The hinge device according to claim 8, **characterized in that** the hinge base is set to at least 1.5 times the thickness of the first member and second member or less; the diameters of the first pivot shaft part, second pivot shaft part, first pivoting part, and second pivoting part are also set to at least 1.5 times the thickness of the first member and second member or less; a protruding part that is 1.5 times the thickness of the respective members or greater is not generated in the pivot-connecting parts of the first member and second member in an open state in which the second member is opened by 150° or greater with respect to the first member; a construction is obtained wherein a substantially flat open surface connecting the open surfaces of the respective members is connected and formed by the first member and second member; and a construction is obtained wherein the open surfaces of the first member and second member can pivot closed to an overlapped state in which these open surfaces are joined.

13. An electronic device using a hinge device, **characterized in that** a main body part is the first member or second member; an opening and closing part that overlaps with the main body part is the second member or first member; and the main body part and opening and closing part are pivotably connected by the hinge device according to any one of claims 1 through 12.

# FIG. 1

## FIG. 2

## FIG. 3

FIG. 4

# FIG. 5

EP 1 983 201 A1

# FIG. 6

**(a)**

**(b)**

**A — A**

## FIG. 7

## FIG. 8

# FIG. 9

# FIG. 10

$$D = \sin^{-1} \frac{R \sin 45°}{H}$$

# FIG. 11

# FIG. 12

(a)

(b)

# FIG. 13

(a)

(b)

# FIG. 14

( a )

( b )

| | | |
|---|---|---|
| **INTERNATIONAL SEARCH REPORT** | International application No.<br>PCT/JP2007/050504 | |

A. CLASSIFICATION OF SUBJECT MATTER
*F16C11/04*(2006.01)i, *G06F1/16*(2006.01)i, *H04M1/02*(2006.01)i

According to International Patent Classification (IPC) or to both national classification and IPC

B. FIELDS SEARCHED

Minimum documentation searched (classification system followed by classification symbols)
F16C11/04, G06F1/16, H04M1/02

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X<br>P,A | JP 2006-304017 A  (Omron Corp.),<br>02 November, 2006 (02.11.06),<br>Full text; all drawings<br>& WO 2006/115144 A1 | 1-5,7-13<br>6 |
| E,X<br>E,A | JP 2007-32763 A  (Sanyo Electric Co., Ltd.),<br>08 February, 2007 (08.02.07),<br>Claims; Par. Nos. [0038] to [0095]; Figs.<br>1 to 12<br>& WO 2007/013620 A1 | 1-4,7-13<br>5,6 |
| A | JP 2004-316382 A  (Keisuke TAKEZAWA),<br>11 November, 2004 (11.11.04),<br>Claims; Figs. 1 to 6<br>(Family: none) | 1-13 |

☒ Further documents are listed in the continuation of Box C.          ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search<br>     12 April, 2007 (12.04.07) | Date of mailing of the international search report<br>     24 April, 2007 (24.04.07) |
| Name and mailing address of the ISA/<br>     Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/050504 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2005-207465 A  (Sugatsune Kogyo Co., Ltd.), 04 August, 2005 (04.08.05), Claims; Figs. 1, 5, 6, 10 & WO 2005/071277 A1      & EP 1707829 A1 | 1-13 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004243962 A